Europäisches Patentamt

European Patent Office

Office européen des brevets

(11) Veröffentlichungsnummer: **0 233 586 B1**

(12) **EUROPÄISCHE PATENTSCHRIFT**

(45) Veröffentlichungstag der Patentschrift: **15.05.91**

(21) Anmeldenummer: **87101895.8**

(22) Anmeldetag: **11.02.87**

(51) Int. Cl.⁵: **B60T 13/16**

(54) **Bremsvorrichtung für die Räder eines Fahrzeuges.**

(30) Priorität: **19.02.86 DE 3605205**

(43) Veröffentlichungstag der Anmeldung:
**26.08.87 Patentblatt 87/35**

(45) Bekanntmachung des Hinweises auf die
Patenterteilung:
**15.05.91 Patentblatt 91/20**

(84) Benannte Vertragsstaaten:
**AT BE DE ES FR GB IT**

(56) Entgegenhaltungen:
**DE-A- 2 706 569**
**DE-A- 2 941 808**

(73) Patentinhaber: **DEERE & COMPANY**
**1 John Deere Road**
**Moline, Illinois 61265(US)**

(72) Erfinder: **Britzius, Urban**
**Silcherring 15**
**W-6712 Bobenheim-Roxheim 2(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

## Beschreibung

Die Erfindung betrifft eine Bremsvorrichtung für die Räder eines Fahrzeuges mit einem pedalbetätigten Geberglied und einem auf die Bremsen wirkenden und mit dem Geberglied über eine in einer Leitung geführten Flüssigkeitssäule direkt verbundenen Nehmerglied, wobei die Bremskraft durch eine Verschiebung der Flüssigkeitssäule mittels des Gebergliedes aufgebaut wird.

Bei dieser Bremsvorrichtung (John Deere TM-4373, June 82) ist das Geberglied als einfacher Hydraulikkolben ausgebildet, der einenends von einem Pedal beaufschlagt werden kann und anderenends die Flüssigkeitssäule in Richtung auf das Nehmerglied, das von einem Ringkolben für in Öl laufende Scheibenbremsen gebildet wird, verschiebt. Der Druck der Flüssigkeitssäule richtet sich nach der Größe der mittels des Pedals aufgebrachten Verschiebekraft.

Diese Bremsvorrichtung benötigt naturgemäß eine gewisse Ansprechzeit vom Anlegen des Fußes an das Pedal bis zum ersten Ansprechen des Nehmergliedes und somit der Bremsen überhaupt.

Bei der Bremsvorrichtung gemäß der DE-A-27 06 569 wird die Bremskraft jedoch ausschließlich von der fremden Druckquelle (Pumpe H) aufgebaut, wobei die Größe der Bremskraft von der Stellung eines Pedalbetätigten Schiebers in dem Nehmerglied abhängig gemacht wird. Mittels des Pedals wird eine Bremskraft nicht erzeugt, sondern dosiert. Die in dieser bekannten Bremsvorrichtung angebrachten Federn 5, 16, 19 erzeugen möglicherweise einen Widerstand, der der Bremskraft entspricht und dem Fahrer ein Gefühl für deren Größe vermittelt; dies ändert jedoch nichts an der Tatsache, daß die Bremskraft ausschließlich von einer fremden Druckquelle aufgebaut wird.

Die der Erfindung zugrunde liegende Aufgabe wird darin gesehen, die Bremsvorrichtung derart zu ändern, daß die Ansprechzeit der Bremsen verringert wird.

Diese Aufgabe ist dadurch gelöst worden, daß an das Geberglied eine Druckleitung mit einer Druckflüssigkeit über einen Einlaß anschließt, der geöffnet wird, um die Druckflüssigkeit in die Leitung einzuspeisen, wenn das Geberglied betätigt wird, wobei der Druck der Druckflüssigkeit unterhalb eines mindestens zu erwartenden Bremsdruckes liegt.

Auf diese Weise wird die Flüssigkeitssäule mittels der bereits anderweitig unter Druck gesetzten Druckflüssigkeit sofort druckbeaufschlagt, wobei die Höhe des Druckes aber so gehalten ist, daß nicht bereits beim Einleiten der Druckflüssigkeit das Nehmerglied über seinen ganzen Weg bewegt wird, sondern es nur angelegt wird, so daß das Geberglied keine Füllarbeit, die nur unmittelbar zum Bremsen beiträgt, leisten muß.

Dadurch, daß der Einlaß nur während eines bestimmbaren Anfangsweges des Gebergliedes geöffnet wird oder ein nur in Richtung zu dem Geberglied öffnendes Ventil in der Druckleitung vorgesehen ist, wird beim Aufbau des höheren Bremsdruckes nach Überwinden des Anfangsweges ein Rückstau in die Druckleitung und die damit verbundene Druckquelle vermieden.

Wenn, wie nach einem anderen die Erfindung fortentwickelnden Merkmal vorgesehen, der Druck der Druckflüssigkeit ca. 10 bar beträgt, wird in der Regel nur ein Anlegen des Nehmerglieds, nicht aber die volle Betätigung der Bremsen, erreicht.

Auf technisch einfache und kostengünstige Weise wird die Druckflüssigkeit bei einem Fahrzeug, das mit einem Ladehydraulikkreis ausgestattet ist, dadurch besorgt, daß die Druckflüssigkeit dem Ladehydraulikkreis entnommen wird.

Beim Vorhandensein einer Bremsvorrichtung mit mindestens einer weiteren Bremsvorrichtung, die mit der Bremsvorrichtung über eine Ausgleichsleitung und über Ausgleichsventile in Verbindung steht, wobei beim anfänglichen Betätigen des Gebergliedes der Bremsvorrichtung und des Gebergliedes der weiteren Bremsvorrichtung die Ausgleichsventile geöffnet werden und ein Druckausgleich über die Ausgleichsleitung stattfindet, wird die Druckflüssigkeit auf sehr einfache Weise allen Bremsvorrichtungen gleichzeitig zugeführt, indem nach einer Fortentwicklung der Erfindung die Druckleitung in die Ausgleichsleitung mündet.

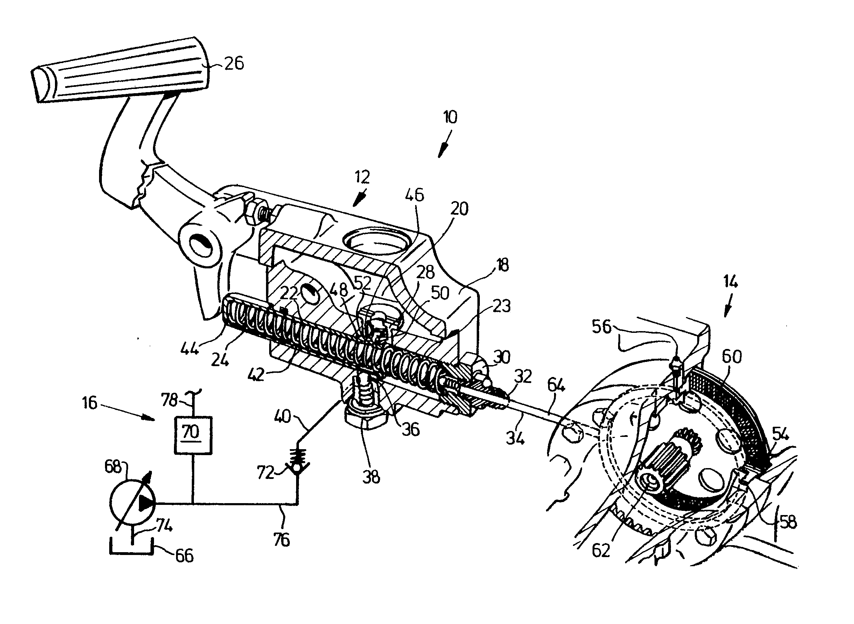

In der Zeichnung ist ein nachfolgend näher beschriebenes Ausführungsbeispiel der Erfindung dargestellt.

Eine Bremsvorrichtung 10 setzt sich im wesentlichen aus einem Geberglied 12 und einem Nehmerglied 14 sowie einem Ladehydraulikkreis 16 zusammen.

Das Geberglied 12 enthält ein Gehäuse 18 mit einem Sammelbehälter 20 und einer Längsbohrung 22 zur schiebebeweglichen Aufnahme eines Hydraulikkolbens 24. Außerdem greift an dem Gehäuse 18 schwenkbeweglich ein Pedal 26 an, das von einem auf einem Fahrerstand eines nicht gezeigten Fahrzeuges, insbesondere dem eines Ackerschleppers, sitzenden Fahrer betätigt werden kann.

Der Sammelbehälter 20 dient der Aufnahme von Flüssigkeit und steht über ein Kippventil 28 mit der Längsbohrung 22 in Verbindung. Das Kippventil 28 greift an dem Außenumfang des Hydraulikkolbens 24 an und wird von diesem geöffnet, wenn er sich in seiner Ruhelage befindet.

Die Längsbohrung 22 ist pedalseitig offen und auf der anderen Seite von einem Anschlußstück 30 weitgehend verschlossen, wobei in dem Anschlußstück 30 nur eine Öffnung 32 für eine Leitung 34 bleibt, die zu dem Nehmerglied 14 führt. Die Längsbohrung 22 wird ferner von einem Einlaß 36 eines Ausgleichsventils 38 geschnitten, das geöffnet wird, sobald der Hydraulikkolben 24 aus seiner Ruhelage verschoben wird. Zwischen der Stelle, an der sich der Einlaß 36 befindet, und dem Anschlußstück 30 ist die Längsbohrung 22 aufgeweitet, so daß sich in diesem Bereich zwischen dem Hydraulikkolben 24 und der Längsbohrung 22 ein Ringraum 23 bildet. Mittels des Ausgleichsventils 38 und einer an dieses angreifenden Ausgleichsleitung 40 wird eine Verbindung zu einem nicht gezeichneten Geberglied einer weiteren Bremsvorrichtung geschaffen, so daß in dem Falle, daß beide Bremsvorrichtungen gleichzeitig betätigt werden, in beiden Leitungen 34 der gleiche Druck herrscht. Die weitere Bremsvorrichtung ist identisch zu der Bremsvorrichtung 10 ausgebildet.

Der Hydraulikkolben 24 ist innen mit einem Hohlraum 42 ausgestattet, der sich zu dem Anschlußstück 30 öffnet und eine Feder 44 in sich aufnimmt. Die Feder 44 stützt sich einenends an dem Hydraulikkolben 24 und anderenends an dem Anschlußstück 30 ab und bewirkt die Rückführung des Hydraulikkolbens 24 in seine Ruhelage, wenn das Pedal 26 nicht mehr betätigt wird. In den Außenumfang des Hydraulikkolbens 24 ist eine Ringnut 46 mit einer linken und einer rechten Schulter 48 und 50 und mit den Hydraulikkolben 24 im Bereich der Ringnut 46 durchbrechenden Bohrungen 52 eingearbeitet. Die rechte Schulter 50 legt sich in der Ruhestellung des Hydraulikkolbens 24 an das Kippventil 28 an, um dieses zu öffnen, woraufhin die in dem Sammelbehälter 20 gespeicherte Flüssigkeit an dem Kippventil 28 vorbei und durch die Bohrungen 52 in den Hohlraum 42 strömt. Mittels der linken Schulter 48 wird beim Verschieben des Hydraulikkolbens 24 das Ausgleichsventil 38 geöffnet, so daß ein Druckausgleich zwischen dieser und einer weiteren Bremsvorrichtung stattfinden kann. Der Hydraulikkolben 24 tritt an seinem geschlossenen Ende aus dem Gehäuse 18 bzw. dessen Längsbohrung 22 aus und liegt an dem Pedal 26 an, um unmittelbar über dieses beim Bremsen verschoben werden zu können.

Das Nehmerglied 14 setzt sich im wesentlichen aus einem Ringkolben 54 und einer Entlüftungsschraube 56 zusammen.

Der Ringkolben 54 ist in einem Ringraum 58 geführt und wirkt auf eine Bremsscheibe 60, mit der eine Antriebswelle 62 eines der Übersichtlichkeit wegen nicht gezeigten Rades abgebremst werden kann. Hierzu steht der Ringraum 58 mit der Leitung 34 in Verbindung, so daß eine in der Leitung 34 aufgebaute Flüssigkeitssäule 64 die von der Betätigung des Pedals 26 herrührende Druckkraft auf den Ringkolben 54 übertragen kann.

Die Entlüftungsschraube 56 ist mit dem Ringraum 58 verbunden und dient zum Entlüften der in der Leitung 34 und in dem Ringraum 58 eingeschlossenen Flüssigkeit.

Der Ladehydraulikkreis 16 setzt sich zusammen aus einem Vorratsbehälter 66, einer in ihrem Verdrängungsvolumen veränderlichen Pumpe 68, einem Druckregelventil 70, einem in nur einer Richtung öffnenden und federbelasteten Ventil 72, einer Saugleitung 74 und einer Druckleitung 76. Dabei schließt an dem Ventil 72 eingangsseitig die Druckleitung 76 und ausgangsseitig die Ausgleichsleitung 40 an. Das Ventil 72 öffnet nur in Richtung zu der Ausgleichsleitung 40. Soll insgesamt nur eine Bremsvorrichtung 10 vorgesehen sein, dann können die Ausgleichsleitung 40 und das bzw. die Ausgleichsventile 38 entfallen und die Druckleitung 76 mit dem Ventil 72 direkt an der Längsbohrung 22 angreifen. Jedoch wäre dann das Ausgleichsventil 38 durch ein in Richtung auf die Längsbohrung 22 schließendes Rückschlagventil zu ersetzen, oder es müßten die Bohrungen 52 so angeordnet sein, daß bei nicht betätigtem Hydraulikkolben 24 die Verbindung zwischen der Druckleitung 76 und der Leitung 34 unterbrochen ist, so daß sich kein Flüssigkeitsdruck an dem Nehmerglied 14 aufbauen kann, wenn das Pedal 26 nicht betätigt ist.

Im Ladehydraulikkreis 16 selbst saugt die Pumpe 68 über die Saugleitung 74 Flüssigkeit aus dem Vorratsbehälter 66 an und fördert diese sowohl zu dem Druckregelventil 70 wie zu dem Ventil 72, und zwar über die Druckleitung 76. Liegt der Druck in der Druckleitung 76 oberhalb von ca. 10 bar, dann öffnet das Druckregelventil 70 zu einem Haupthydraulikkreis, der nur angedeutet und mit der Ziffer 78 versehen ist. Jedenfalls öffnet die in der Druckleitung 76 unter Druck gesetzte Druckflüssigkeit das Ventil 72 entgegen der Federkraft und strömt zu dem Ausgleichsventil 38, wo ihr der Zustrom zur Längsbohrung 22 versperrt ist, solange sich der Hydraulikkolben 24 in seiner Ruhelage befindet.

Die Funktion der Bremsvorrichtung 10 beim Bremsvorgang stellt sich nun wie folgt dar.

Der Fahrer betätigt das Pedal 26, woraufhin der Hydraulikkolben 24 in der Längsbohrung 22 verschoben wird. Sobald sich der Hydraulikkolben 24 zu bewegen beginnt, öffnet die linke Schulter 48 das Ausgleichsventil 38, und von der Pumpe 68 gelieferte Druckflüssigkeit strömt an dem Einlaß 36 vorbei über den Ringraum 23 und die Bohrungen 52 in die Längsbohrung 22, von wo aus sie durch die Leitung 34 zu dem Ringraum 58 gelangt und diesen füllt, so daß hierzu nur eine geringst mögliche Verschiebung des Hydraulikkolbens 24 erforderlich ist. Sofern noch eine weitere Bremsvorrichtung verwendet wird, strömt die Druckflüssigkeit auch zu dieser. Der eigentliche Druck zum Verschieben des Ringkolbens 54 in dem Ringraum 58 wird durch die fortdauernde Betätigung des Pedals 26 aufgebaut.

Zum Entlüften des Ringraumes 58 wird lediglich das Pedal 26 niedergetreten und die Entlüftungsschraube 56 geöffnet, woraufhin von der Pumpe 68 geförderte Flüssigkeit durch das Geberglied 12 und das Nehmerglied 14 strömt und eventuell eingeschlossene Luft hinausdrängt.

Das Ventil 72 kann auch entfallen, wenn nach einem Anfangsweg des Hydraulikkolbens 24 der Einlaß 36 auf andere Weise, etwa mittels eines auf dem Hydraulikkolben 24 aufgebrachten Steges, wieder geschlossen wird, so daß ein Rückstaudruck nicht entstehen kann.

## Ansprüche

1. Bremsvorrichtung (10) für die Räder eines Fahrzeuges mit einem pedalbetätigten Geberglied (12) und einem auf die Bremsen wirkenden und mit dem Geberglied (12) über eine in einer Leitung (34) geführten Flüssigkeitssäule direkt verbundenen Nehmerglied (14) wobei die Bremskraft durch eine Verschiebung der Flüssigkeitssäule mittels des Gebergliedes (12) aufgebaut wird, dadurch gekennzeichnet, daß an das Geberglied (12) eine Druckleitung (76) mit einer Druckflüssigkeit über einen Einlaß (36) anschließt, der geöffnet wird, um die Druckflüssigkeit in die Leitung (34) einzuspeisen, wenn das Geberglied (12) betätigt wird, wobei der Druck der Druckflüssigkeit unterhalb eines mindestens zu erwartenden Bremsdruckkes liegt, und daß der Einlaß (36) nur während eines bestimmbaren Anfangsweges des Gebergliedes (12) geöffnet wird oder daß ein nur in Richtung zu dem Geberglied (12) öffnendes Ventil (72) in der Druckleitung (76) vorgesehen ist.

2. Bremsvorrichtung nach Anspruch 1, dadurch gekennzeichnet, daß der Druck der Druckflüssigkeit ca. 10 bar beträgt.

3. Bremsvorrichtung nach Anspruch 1, wobei das Fahrzeug mit einem Ladehydraulikkreis (16) ausgestattet ist, dadurch gekennzeichnet, daß die Druckflüssigkeit dem Ladehydraulikkreis (16) entnommen ist.

4. Bremsvorrichtung nach Anspruch 1 mit mindestens einer weiteren Bremsvorrichtung, die mit der Bremsvorrichtung (10) über eine Ausgleichsleitung (40) und über Ausgleichsventile (38) in Verbindung steht, wobei beim anfänglichen Betätigen des Gebergliedes (12) der Bremsvorrichtung (10) und des Gebergliedes der weiteren Bremsvorrichtung die Ausgleichsventile (38) geöffnet werden und ein Druckausgleich über die Ausgleichsleitung (40) stattfindet, dadurch gekennzeichnet, daß die Druckleitung (76) in die Ausgleichsleitung (40) mündet.

## Claims

1. Brake device (10) for the wheels of a vehicle, with a pedal-operated transmitter member (12) and a receiver member (14) acting on the brake and connected directly to the transmitter member (12) through a fluid column conveyed in a line (34), wherein the braking force is developed by displacement of the fluid column by means of the transmitter member (12), characterized in that a pressure line (76) with a fluid under pressure is connected to the transmitter member (12) through an inlet (36) which is opened, in order to charge the fluid under pressure into the line (34) when the transmitter member (12) is actuated, wherein the pressure of the fluid under pressure lies below a least expected braking pressure, and in that the inlet (36) is only opened during a predetermined initial stroke of the transmitter member (12) or in that a valve (72) opening only in the direction of the transmitter member (12) is provided in the pressure line (76).

2. Braking device according to claim 1, characterized in that the pressure of the fluid under pressure amounts to about 10 bar.

3. Braking device according to claim 1, wherein the vehicle is fitted with a charging hydraulic circuit (16), characterized in that the fluid under pressure is taken from the charging hydraulic circuit (16).

4. Braking device according to claim 1, with at least one further braking device, which is connected to the braking device (10) through an equalising line (40) and through equalising valves (38), wherein on initial operation of the transmitter member (12) of the braking device (10) and of the transmitter member (12) of the further braking device, the equalising valves (38) are opened and pressure equalisation takes place through the equalising line, characterized in that the pressure line (76) opens into the equalising line (40).

## Revendications

1. Dispositif de freinage (10) pour les roues d'un véhicule comportant un transmetteur (12) actionné par la pédale et un capteur (14) agissant sur les freins et raccordé directement au transmetteur (12) par l'intermédiaire d'une colonne de liquide située dans une canalisation (34), la force de freinage étant établie au moyen d'un déplacement de la colonne de liquide à l'aide du transmetteur (12), caractérisé en ce qu'au transmetteur (12) est raccordée une canalisation de pression (76) contenant un liquide sous pression, par l'intermédiaire d'une entrée (36), qui s'ouvre pour introduire le liquide sous pression dans la canalisation (34) lorsque le transmetteur (12) est actionné, la pression du liquide sous pression étant inférieure au moins à une pression de freinage à laquelle on doit s'attendre, et que l'entrée (36) est ouverte uniquement pendant une course initiale pouvant être déterminée du transmetteur (12) ou qu'il est prévu dans la canalisation de pression (76) une soupape (72) qui s'ouvre uniquement en direction du transmetteur (12).

2. Dispositif de freinage selon la revendication 1, caractérisé en ce que la pression du liquide sous pression est égale à environ 10 bars.

3. Dispositif de freinage selon la revendication 1, utilisé dans un véhicule équipé d'un circuit hydraulique de charge (16), caractérisé en ce que le liquide sous pression est prélevé du circuit hydraulique de charge (16).

4. Dispositif de freinage selon la revendication 1 comportant au moins un autre dispositif de freinage qui est relié au dispositif de freinage (10) par l'intermédiaire d'une canalisation de compensation (40) et de soupapes de compensation (38), de sorte que, lors de l'actionnement initial du transmetteur (12) du dispositif de freinage (10) et du transmetteur de l'autre dispositif de freinage, les soupapes de compensation (38) s'ouvrent et une compensation de pression est réalisée par l'intermédiaire de la canalisation de compensation (40), caractérisé en ce que la canalisation de pression (76) débouche dans la canalisation de compensation (40).